(19) Europäisches Patentamt
European Patent Office
Office européen des brevets

(11) Publication number: **0 455 191 A2**

(12) # EUROPEAN PATENT APPLICATION

(21) Application number: **91106908.6**

(51) Int. Cl.[5]: **C08F 297/02**, C08L 53/00

(22) Date of filing: **29.04.91**

(30) Priority: **30.04.90 US 518008**

(43) Date of publication of application:
**06.11.91 Bulletin 91/45**

(84) Designated Contracting States:
**DE FR GB**

(71) Applicant: **EASTMAN KODAK COMPANY**
**343 State Street**
**Rochester, New York 14650-2201(US)**

(72) Inventor: **Long, Timothy Edward, c/o**
**EASTMAN KODAK COMPANY**
**Patent Department, 343 State Street**
**Rochester, New York 14650 - 2201(US)**
Inventor: **Teegarden, David Morrison, c/o**
**EASTMAN KODAK CO.**
**Patent Department, 343 State Street**
**Rochester, New York 14650 - 2201(US)**

(74) Representative: **Brandes, Jürgen, Dr.Rer.Nat. et al**
**Wuesthoff & Wuesthoff, Patent- und Rechtsanwälte, Schweigerstrasse 2**
**W-8000 München 90(DE)**

(54) **Block copolymers containing poly(1,3-conjugated dienes) and poly(vinylphenols), silyl protected poly(vinylphenols) or poly(metal phenolates).**

(57) Diblock and triblock copolymers are disclosed consisting of a poly(1,3-conjugated diene) block and a block of a poly(vinylphenol), a silyl protected poly(vinylphenol), or a poly(metal phenolate).

EP 0 455 191 A2

Homopolymers and copolymers of poly(vinylphenols) are being utilized for many new technological applications. Recent interest in poly(vinylphenols) has focused in the areas of photoresists for microlithography, adsorbants for the removal of organic compounds from aqueous wastes, and biomedical applications. Further applications, particularly in the field of polymer blends, include electrical insulators, fire retardant materials and permselective membranes.

However, due to the inherent reactivity of phenols, vinylphenol polymerizes poorly when free radical or cationic initiators are utilized, and not at all with anionic initiators. Chain transfer to monomer and/or polymer is believed to be partly responsible for the low molecular weights which are usually obtained by free radical polymerization of vinylphenol. Moreover, it has been demonstrated that pure 4-vinylphenol undergoes self-initiated polymerization and the degree of polymerization is essentially independent of added free radical initiator. Thus, in order to obtain high molecular weight linear polymers, a protected phenol must be polymerized and subsequently deblocked.

The synthesis of poly(vinylphenol)-containing block copolymers has received limited attention compared to homopolymers and random copolymers of poly(vinylphenol) due to the inherent difficulties in preparing block copolymers and the lack of available synthetic routes and suitable protected monomers for making block polymers.

Thermoplastic elastomers based on block copolymers of styrene and an aliphatic, conjugated 1,3-diene are being used with increasing frequency for many applications. Their desirable properties arise from the ability of the chemically different blocks to microphase separate resulting in a thermally processable elastomer. The use temperatures for the elastomer are governed by the glass transition temperatures of the blocks, that is 100° C and -60° C for the polystyrene block and polyisoprene blocks respectively. In addition, the ability of the blocks to microphase separate depends on the difference in solubility of the two blocks. Limited attention has been directed towards maximizing the difference in solubility by increasing the polarity of the styrenic block. Further, increasing the upper glass transition temperature and introducing reactive, polar functionalities to the styrenic blocks have been relatively unexplored.

Thus, it is evident that it would be desirable to provide new classes of poly(vinylphenol) block copolymers. It would be particularly desirable to provide new classes of poly(vinylphenol) block copolymers by anionic polymerization because this technique provides polymers having narrow molecular weight distributions and predictable molecular weights.

We have discovered that block copolymers can be prepared containing repeating units of a poly(1,3-conjugated diene) and units of a poly(vinylphenol), a silyl protected poly(vinylphenol) or a poly(metal phenolate).

More particularly, in accordance with this invention, there are provided block copolymers consisting of at least one poly(1,3-conjugated diene) block and at least one block of a poly(vinylphenol), a silyl protected poly(vinylphenol), or a poly(metal phenolate).

In another aspect of this invention, the above-described block copolymers are prepared in a method which comprises forming the diene block by polymerizing a polymerizable 1,3-conjugated diene monomer in a reaction medium comprising a nonpolar solvent and an anionic initiator; forming the silyl protected poly(vinylphenol) block by adding to the medium and polymerizing therein a polymerizable silyl protected vinylphenol monomer; optionally removing said silyl protective group; optionally contacting the unprotected polymer with a basic metal salt; and isolating the resulting block copolymer.

Alternatively, the silyl protected phenol block can be formed first in a nonpolar medium, followed by the formation of the rubbery diene block. Optional deprotection to the phenol or conversion to the metal phenolate as described above is possible.

It is a particularly advantageous feature of this invention that there are provided new classes of block copolymers and a method for the preparation thereof, which block copolymers possess narrow molecular weight distributions and predictable molecular weights.

This invention is based at least partly on the discovery that a polymeric initiator such as

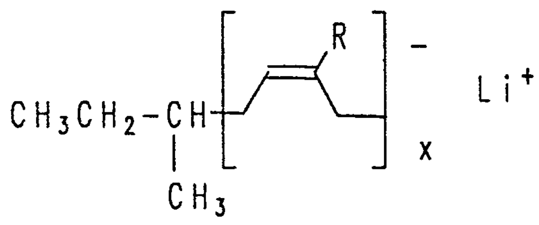

initiates the polymerization of a silyl protected vinylphenol monomer under conditions in which the anionic portion of the silyl protected poly(vinylphenol) does not react with the silyl moiety thereof to an extent which prohibits polymerization.

This invention provides block copolymers having the configuration AB. Although the description which follows is concerned primarily with block copolymers in a diblock configuration, the block copolymers of this invention can exist as ABA triblocks and higher order block copolymers. Conventional coupling agents such as dichlorosilanes and divinylbenzene can be used to prepare ABA triblock structures.

As noted, the block copolymers of this invention contain at least one block of a poly(vinylphenol), a silyl protected poly(vinylphenol), or a poly(metal phenolate). These blocks preferably have the structural formula:

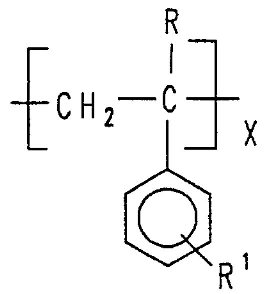

wherein R is H or $CH_3$;

$R^1$ is selected from the group consisting of - OH,-0Si$(CH_3)_2C(CH_3)_3$ and -OM;

M is a metal cation; and

X is 3 - 100,000. In preferred embodiments, X is 10-10,000. The molecular weight of the A block can vary from $4 \times 10^2$-$12 \times 10^6$ and preferably is from $12 \times 10^2$ - $12 \times 10^5$.

The methods described hereinafter can also be used to prepare compositions of matter containing a linear 1,3-conjugated diene polymer having attached thereto one or two units derived from the above-described structural formula, that is, wherein X is one or 2. Such telechelic compositions find utility, for example, as macromonomers in a subsequent polymerization or as difunctional monomers useful in step growth polymerization.

In the above formula, M represents a metallic cation. M can be essentially any univalent or divalent alkali, alkaline earth or transition metal cation. Non-limiting examples of such cations include sodium, magnesium, calcium, lithium, potassium and zinc cations.

It is contemplated that $R^1$ in the formula above can be located in either the para- or meta-position. It is preferred, primarily for reasons of availability of starting materials and ease of synthesis, that $R^1$ be located in the para- position. Additionally, it is contemplated that in addition to the $R^1$ substituent that the pendant benzene ring can be substituted with such non-interfering substituents as $C_1$-$C_4$ alkyl, for example, in one or both meta positions.

The rubbery diene block is derived from a 1,3-conjugated diene such as 1,3-butadiene, isoprene or 1,3-pentadiene. This block preferably has the structural formula

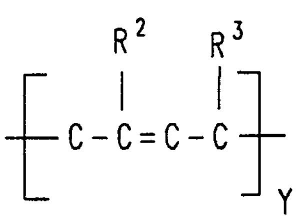

wherein $R^2$ and $R^3$ are individually H or $CH_3$ and Y is 3-100,000. In preferred embodiments, Y is 10-10,000. The molecular weight of the diene block can be varied from $1.5 \times 10^2$- $5 \times 10^6$ and preferably is from $5 \times 10^2$-$5 \times 10^5$.

Higher molecular weights than those described above are generally not preferred due to problems with trace impurities and control of the polymerization reactions.

The block copolymers of this invention can be prepared preferably in accordance with the methods

described in the summary above. As noted, the diene block can be formed by polymerizing a polymerizable 1,3-conjugated diene monomer in a reaction medium including a nonpolar solvent and an initiator. Preferably, the diene block can be formed in cyclohexane at a temperature from 10-70° C, more preferably 15-60° C. Cyclohexane permits generation of the desired 1,4-microstructure. On the other hand, polar solvents, such as, for example, THF, or polar modifiers, such as, for example, dipiperidinoethane, provide a structure having pendant unsaturation (3,4-microstructure). However, other nonpolar solvents such as acyclic aliphatic hydrocarbon compounds and toluene are expected to be useful in forming the desired poly(1,3-diene) block structure.

After the diene block is formed, the protected phenol block is formed by adding to the reaction medium and polymerizing therein the silyl protected vinylphenol monomer.

Alternatively, the protected phenol block can be formed first by, for example, polymerizing the silyl protected vinylphenol monomer in a reaction medium including a nonpolar solvent and an initiator. Preferably, the protected phenol block can be formed in cyclohexane at a temperature from 10-70° C, more preferably 15-60° C. Then the diene block is formed by adding to the reaction medium and polymerizing therein the 1,3-conjugated diene monomer. Under these conditions, it was surprising that the carbanion intermediate of the first block was sufficiently long-lived to provide block copolymers upon addition of the diene.

A schematic of a preferred preparation sequence follows.

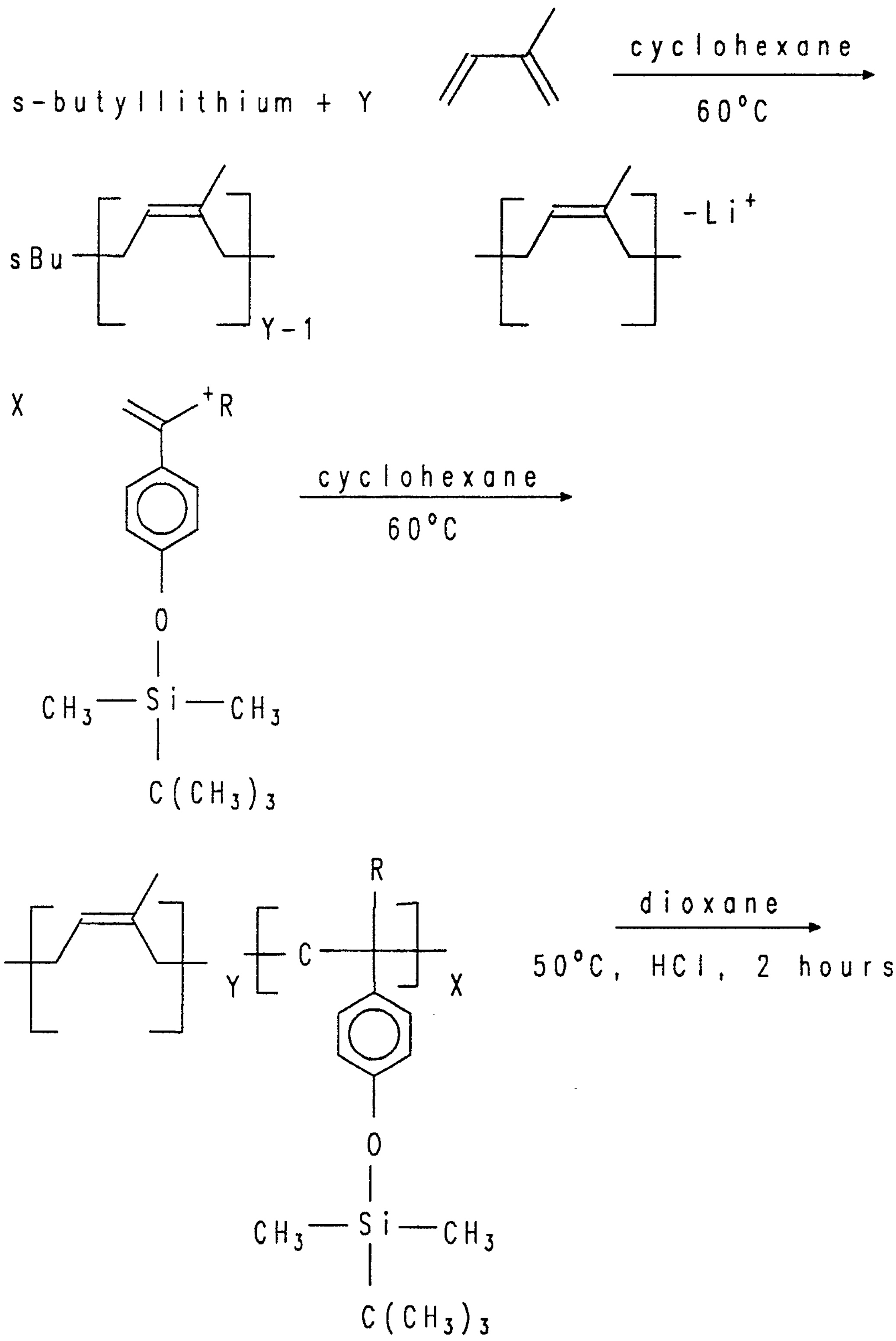
s-butyllithium + Y
cyclohexane
60°C
cyclohexane
60°C
dioxane
50°C, HCl, 2 hours

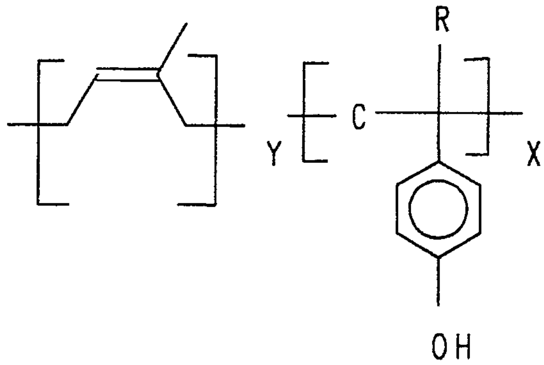

As depicted in the above scheme, the preferred silyl protected starting monomer is 4-(tert-butyldimethylsiloxy)styrene. This starting monomer itself can be readily prepared by treating 4-vinylphenol with tert-butyldimethylsilyl chloride in the presence of triethyl amine in dichloromethane or by other conventional methods familiar to those skilled in the art.

While 4-(tert-butyldimethyl)silyl is the preferred protecting group, other sterically hindered trialkyl and/or aryl substituted silyl protecting groups, for example, triisopropylsilyl and triisobutylsilyl groups, are expected to be useful herein. On the other hand, trimethyl silyl is not an effective protecting group. It is believed that the reason for this is that such group provides insufficient steric hindrance.

Suitable initiators for the polymerization of polymers in accordance with this invention include organolithium compounds such as n-butyllithium, sec-butyllithium, tert-butylithium, n-hexyllithium, isohexyllithium, phenyllithium, naphthylithium, sodium alpha-methylstyrene dimers, organometallic compounds of group 1A of the Periodic Table such as sodium naphthalide and lithium naphthalide and organomagnesium compounds. The molar ratio of the monomer to the initiator selected depends on the molecular weight desired. The molar ratio of monomer to initiator can range from 5 to $10^5$. The polymerization reactions can be terminated by adding a terminator such as methanol to the reaction medium.

S. Nakahama, "Anionic Living Polymerization of Protected Functional Monomers" A.C.S. Polymer Preprints 27, No. 1 (1986) pages 194-195 describes the preparation of a block copolymer of poly-(vinylphenol) and poly(a-methylstyrene) in THF at -78° C. However, there is no suggestion of the present block copolymers containing diene units with predominantly 1,4-microstructure. Moreover, it was surprising that the present copolymers could be prepared in light of competing reactions which one skilled in the art would expect to predominate under the reaction conditions required to prepare these block copolymers. For example, it was not obvious that the polymeric initiator described above would initiate polymerization of the silyl protected vinylphenol monomer without preferentially attacking the reactive silicon group. Furthermore, it was unexpected that the anionic portion of the silyl protected poly(vinylphenol) intermediate did not react with the reactive silyl moiety at an appreciable rate under the preferred reaction conditions, that is, in the presence of a nonpolar solvent, for example, cyclohexane. Finally, Nakahama et al suggest that low temperature, that is, -78° C, is critical to the stability of the poly[4-(tert-butyldimethylsiloxy)styryl]lithium intermediate. Thus, it was surprising that this intermediate was sufficiently stable at temperatures of 15-60° C to enable the formation of well-defined block copolymers.

Removal of the protective groups can be accomplished by acid hydrolysis of the polymer containing protected hydroxyl groups. For example, the protected polymer can be converted to its hydroxyl form substantially quantitatively by hydrolysis in an HCl-dioxane solution. Other known techniques are expected to be useful in removal of the protective group, for example, tetrabutyl ammonium fluoride.

The block copolymer containing the poly(metal phenolates) can be conveniently prepared by removing the silyl protective group as described above and contacting the block copolymer with an appropriate basic metal salt. Thereafter, the block copolymers of the invention can be isolated by conventional techniques.

Polymers of this invention include: poly(vinylphenol-b-isoprene), poly(vinylphenol-b-(1,3-butadiene))-,poly(vinylphenol-b-(1,3-pentadiene)), poly(4-tert-butyldimethylsiloxystyrene-b-isoprene), poly (4-tert-butyldimethylsiloxystyrene-b-(1,3-butadiene)) poly(4-tert-butyldimethylsiloxystyrene-b-(1,3-penta-diene)) and poly(potassium phenolate-b-isoprene).

The block copolymers of this invention are useful as low modulus thermoplastic elastomeric rubbers and as components in polymer blends. In addition, these block copolymers are expected to be useful as flow and viscosity modifiers, and in adhesive and surfactant compositions.

As noted above, it is a particularly advantageous feature of this invention that the described block copolymers can be readily prepared in predictable molecular weights having a narrow molecular weight

distribution.

The block copolymers of this invention containing poly(vinylphenol) have several advantages over block copolymers containing styrene and alkyl-substituted styrene analogues. For example, the poly(vinylphenol) block renders the copolymer more hydrophilic and introduces hydrogen bonding capabilities. Further, the poly(vinylphenol) has a thermal stability comparable to styrene and has a glass transition temperature of 185° C which is approximately 80° C higher than styrene. In addition, the phenolic moiety can be utilized in subsequent reactions which are characteristic of monomeric phenols.

It is contemplated that the blocks containing repeating units derived from the 1,3-conjugated diene monomer can be hydrogenated by techniques known in the art to form polyethylene and poly(ethylene-co-propylene) blocks.

The following examples further illustrate this invention.

Example 1:

Approximately 20 g of 4-(tert-butyldimethylsiloxy)styrene was dissolved in 400 mL of cyclohexane at 60° C under an inert atmosphere. The monomer had been previously vacuum distilled from calcium hydride and dibutylmagnesium. Cyclohexane was purified by stirring over sulfuric acid for 8-10 days and distilling from a sodium dispersion under nitrogen. s-Butyllithium initiator (1.3 M in cyclohexane, 1.54 mL) was added to the reactor and immediately an orange color which was consistent with a delocalized carbanion formed. The reactor nitrogen pressure was maintained at 10-15 psi (.7-1.05 $Kg/cm^2$) during the course of the polymerization. After polymerization of the first block, isoprene (44 mL) was added directly to the reactor and the orange color faded to a pale yellow color which is consistent with the formation of poly-(isoprenyllithium) anion. The second block was allowed to polymerize for 2 hours and degassed methanol was used to terminate the polymerization. The polymer was precipitated into a 10X excess of methanol and dried in vacuo at 30° C. Antioxidant (0.5 wt. %) was added to prevent oxidative degradation.

Example 2:

The monomers and solvent were purified exactly as described in Example 1. However, in this example the order of monomer addition was reversed and similar color changes were noted. Isoprene was initiated with s-butyllithium in cyclohexane and allowed to polymerize for 2 hours at 60° C. 4-(tert-Butyldimethylsiloxy)styrene was added directly to the poly(isoprenyllithium) carbanion. The polymer was terminated and isolated in a similar fashion. The molecular weight distributions of resulting block copolymers prepared by this technique ranged from about 1.15 to about 1.7. $^1H$ NMR analysis indicated efficient incorporation of the silyl protected monomer.

Example 3:

Approximately 30 g of isoprene was dissolved in 400 mL of cyclohexane and initiated with 0.77 mL (1.3 M in cyclohexane) of s-butyllithium at 60° C. The polymerization was allowed to proceed for 2 hours to ensure complete conversion. Tetrahydrofuran (300 mL) which had been vacuum distilled twice from sodium/benzophenone was added to the reactor. Several aliquots were transferred to round bottomed flasks and cooled to -78° C. 4-(tert-Butyldimethylsiloxy)styrene was added via a syringe to the round bottomed flasks and an orange color which was indicative of the formation of a delocalized carbanion was formed. After 1 hour, the polymerization was terminated with degassed methanol and isolated in a similar fashion. The molecular weight distributions of resulting block copolymers prepared by this technique ranged from about 1.15 to about 1.7. $^1H$ NMR analysis indicated efficient incorporation of the silyl protected monomer.

Example 4:

20 g 4-(tert-Butyldimethylsiloxy)styrene was dissolved in 300 mL of cyclohexane at 60° C and initiated with 3.05 mL of s-butyllithium (1.3 M in cyclohexane). Molecular weight measurements by gel permeation chromatography indicated that polymerization was complete after 30 minutes and that molecular weight distributions ranged from about 1.2 to about 1.7.

Example 5:

In a three-necked, round-bottomed flask fitted with a reflux condenser and gas inlet adaptor, 3.75 g of

poly(isoprene-b-t-buyldimethylsiloxystyrene) and 0.4 g of Irganox™ an antioxidant, were dissolved in 40 mL of p-dioxane. Sufficient conc HCl to make a saturated solution (ca. 5 mL) was added dropwise with efficient stirring. After nitrogen had been bubbled through the solution for approximately 10 min, the mixture was stirred and heated at 50°C for approximately 8 hrs. Then the mixture was precipitated into 800 mL of heptane, filtered, and the precipitate washed well with heptane, and dried in a vacuum dessicator for 48 hrs. Peaks in the proton nmr spectrum at 7.3 and 6.5 ppm w, and the absence of peaks at 1.0 and 0.15 ppm, confirmed the complete removal of siloxy protecting group. The peaks at 5.1 (broad s), 4.8 (pair of doublets), 2.1, 1.7, and 1.6 ppm (all singlets) integrated the same as those in the protected block copolymer and are consistent with a mostly (ï 90%) 1,4 microstructure of the poly(isoprene) blocks. There was no evidence of new peaks in the nmr spectrum resulting from degradation of the isoprene blocks. Differential Scanning Calorimetry (DSC) revealed two glass transition temperatures, -57°C and 185°C, consistent with a microphase separated block copolymer of isoprene and 4-vinylphenol.

Example 6:

In a 125 mL Erlenmeyer flask, 4.0 g of the protected block copolymer of Example 5 was dissolved in 60 mL of THF under argon. 10 mL of glacial acetic acid was added dropwise with rapid stirring, followed by a sufficient volume of 1.0 M tetrabutylammonium fluoride solution in THF to provide a stoichiometric excess with respect to the number of moles of t-butyldimethylsiloxy protecting group. This solution was stirred under Ar for 4 hours at room temperature, then precipitated into 1 L of heptane, filtered, the precipitate washed well with heptane and then dried in a vacuum dessicator at room temperature for at least 24 hours. Characterization produced results as described in Example 5.

**Claims**

**1.** A block copolymer containing at least one poly(1,3-conjugated diene) block and at least one block of a poly(vinylphenol), a silyl protected poly(vinylphenol) or a poly(metal phenolate).

**2.** The copolymer of claim 1 containing a block of repeating units having the structural formula

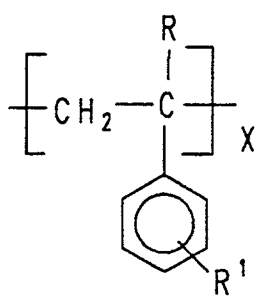

wherein R is H or $CH_3$;
$R^1$ is selected from the group consisting of - OH,$-0Si(CH_3)_2C(CH_3)_3$ and -OM;
M is a metal cation; and
X is 3 - 100,000.

**3.** The copolymer of claim 1 wherein said diene block contains repeating units having the structural formula:

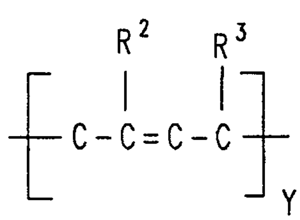

wherein $R^2$ and $R^3$ are individually H or $CH_3$ and Y is 3-100,000.

**4.** The copolymer of claim 1 wherein said diene block contains repeating units derived from isoprene, 1,3-butadiene or 1,3-pentadiene.

**5.** A method of preparing the block copolymer, said method comprising the steps of:
forming a poly(1,3-conjugated diene) block by polymerizing a polymerizable 1,3-conjugated diene monomer in a reaction medium comprising a nonpolar solvent and an anionic initiator;
forming a silyl protected poly(vinylphenol) block by adding to said reaction medium and polymerizing therein a polymerizable silyl protected vinylphenol monomer; and
isolating the block copolymer.

**6.** The method of claim 5, wherein said nonpolar solvent is cyclohexane.

**7.** The method of claim 6 wherein said blocks are formed at a temperature from 10-70 °C.

**8.** A method of preparing a block copolymer, said method comprising the steps of:
forming a silyl protected poly(vinylphenol) block by polymerizing a polymerizable silyl protected monomer in a reaction medium comprising a nonpolar solvent and an anionic initiator;
forming a poly(1,3-conjugated diene) block by adding to said reaction medium and polymerizing therein a polymerizable 1,3-conjugated diene monomer;
optionally removing said silyl protective group;
optionally contacting the unprotected polymer with a basic metal salt; and
isolating said block copolymer.

**9.** The method of claim 8, wherein said nonpolar solvent is cyclohexane.